# EUROPÄISCHE PATENTSCHRIFT

(11) **EP 2 323 832 B1**
(45) Veröffentlichungstag und Bekanntmachung des Hinweises auf die Patenterteilung: **12.10.2016**
(21) Anmeldenummer: 09736104.2
(22) Anmeldetag: 19.08.2009
(51) Int. Cl.: B29C 55/04, B29C 65/18, B31B 23/00, A61J 1/10, B29C 51/04

(54) **VORRICHTUNG ZUM VERSCHWEISSEN EINES VERBINDUNGSBEREICHS EINER FOLIE MIT EINEM ANSCHLUSSTEIL SOWIE VERWENDUNG, VERFAHREN, ANLAGE UND BEUTEL**
APPARATUS FOR WELDING A JOINING REGION OF A FOIL TO A CONNECTING PART AND USE, METHOD, SYSTEM AND BAG
DISPOSITIF DE SOUDAGE D'UNE ZONE DE LIAISON D'UN FILM À UN ÉLÉMENT DE RACCORDEMENT ET UTILISATION, PROCÉDÉ, INSTALLATION ET SACHET

(30) Priorität: 08.09.2008 DE 102008046064; 04.02.2009 DE 102009007546
(43) Veröffentlichungstag der Anmeldung: 25.05.2011
(73) Patentinhaber: Kiefel GmbH, 83395 Freilassing (DE)
(72) Erfinder: GSCHWENDTNER, Rupert, 83435 Bad Reichenhall (DE); KLEIN, Martin, 5400 Hallein (AT)
(74) Vertreter: Farago, Peter Andreas
(86) Internationale Anmeldenummer: PCT/DE2009/001168
(87) Internationale Veröffentlichungsnummer: WO 2010/025699

(56) Entgegenhaltungen:
- DE-A1- 10 317 375
- DE-A1-102006 004 611

## Beschreibung

Die Erfindung betrifft eine Vorrichtung zum Verschweißen eines Verbindungsbereichs einer Folie mit einem Anschlussteil sowie ein Verfahren, eine Verwendung einer Folie, eine Anlage zum Produzieren von Beuteln und einen Beutel, welcher auf diese Weise hergestellt ist.

Es stellt sich regelmäßig die Aufgabe, eine Folie oder mehrere Folien mit einem Anschlussteil in einer gewerblichen Produktionsanlage zu verschweißen.

Ein sehr gängiges Beispiel zeigt die WO 2007/140 760 A2. Dort werden Beutel hergestellt, welche schließlich insbesondere als Medizinprodukte Verwendung finden. Zum Herstellen des benötigten Ausflussstücks am Beutel wird ein schlauchförmiges Anschlussteil zwischen zwei Folien eingeschweißt. Hierzu wird das schlauchförmige Anschlussteil an einer Mandrene angeordnet. Die Folien werden eben oberhalb und unterhalb des Anschlussteils angeordnet. Dann fährt ein Werkzeug an die Folien heran, legt diese bei weiterem Zusammenfahren von Ober- und Unterwerkzeug flächig in einem Verbindungsbereich um das Anschlussteil herum, bis sich die Folien neben dem Verbindungsbereich aneinander anlegen. Sodann wird einerseits eine Schweißverbindung zwischen dem Anschlussteil und den Folien, andererseits außerhalb des Verbindungsbereichs zwischen den Folien direkt hergestellt.

Ein weiteres gängiges Beispiel ist in der DE102006004611 offenbart.

In der Praxis werden oft zwei oder mehr Mandrenen in einem Verschweißvorgang nebeneinander angeordnet. In diesem Fall gibt es mehrere Verbindungsbereiche, nämlich jeweils zwischen den Folien und den einzelnen schlauchförmigen Anschlussteilen, während zwischen den Verbindungsbereichen die Folien unmittelbar miteinander zum Abdichten des herzustellenden Beutels verschweißt werden.

Es versteht sich, dass auch mehr als nur zwei Folien eingesetzt werden können.

Der Erfindung liegt die Aufgabe zugrunde, die bestehenden Anlagen und die resultierenden Produkte zu verbessern.

Nach einem ersten Aspekt der Erfindung löst diese Aufgabe eine Vorrichtung nach Anspruch 3.

Begrifflich sei erläutert, dass als "Verbindungsbereich" derjenige Bereich verstanden werden soll, in welchem die Folie mit dem Anschlussteil verbunden sein soll. Als "außerhalb des Verbindungsbereichs" ist daher ein Bereich der Folie zu verstehen, der nicht mit dem Anschlussteil in Verschweißung gebracht sein soll, sondern vielmehr bei einem Anschlussteil seitlich daneben liegen soll, beziehungsweise bei mehreren Anschlussteilen seitlich zwischen oder ganz neben den Verbindungsbereichen. Als "innerhalb" ist dementsprechend ein Bereich zu verstehen, welcher im verschweißten Zustand Kontakt mit dem Anschlussteil haben soll.

Als ein "Verlängern" der Folie sei ein mechanischer Eingriff verstanden, welcher der Folie eine Längenreserve zur Verfügung stellen soll, damit die ihrerseits zweidimensionale Folie ihre erforderliche zusätzliche Länge beim Umformen des dreidimensionalen Anschlussteils ohne nennenswerte Zugkräfte aus dem verlängerten Bereich holen kann, zumindest zum Teil, und somit jedenfalls nicht vollständig aus dem Verbindungsbereich selbst.

Der Erfindung liegt die Erkenntnis zugrunde, dass bei der herkömmlichen Behandlung der Folie diese vom Schweißwerkzeug um das Anschlussteil herumgezogen wird. Dies geht mit einer starken mechanischen Einwirkung auf die Folie einher, weil das Anschlussteil in der Regel dreidimensional ist und die Folie somit um die Abwicklung des Anschlussteils herumgezogen wird. Die Abwicklung ist im Normalfall länger als der direkte, ebene Verbindungsweg zwischen der endgültigen Lage der Folie. Die Folie wird daher zwangsweise verlängert. Dies gilt insbesondere bei der gewerblichen Herstellung von Schweißverbindungen zwischen Folien und Anschlussteilen, denn dort werden meist Endlosfolienbahnen eingesetzt. Diese werden am Rand mittels geeigneter Transporteinrichtungen gehalten, beispielsweise mit Kluppenketten, Nadelketten oder mit Zangenvorschub. Sowohl die Tatsache, dass ein glattes Band der Verformungsstelle nachläuft, als auch die Tatsache, dass die Bahn am Rand gehalten wird, sind jede für sich einem spannungsarmen Verlängern der Folie im Weg stehend. Die Folie verlängert sich daher nach Forschungen der Erfinder oft genau in dem Bereich der steilen Flanken der Anschlussteile, also beispielsweise der schlauchförmigen Röhrchen. Es kann daher zu einer Ausdehnung der Folie kommen, zu einer schlechten Verschweißung, zu einer Quetschung der Folie, zu einer Faltenbildung, zu einem Schweißbereich, der im Schlauch liegt, oder insgesamt zu einer nicht optimalen Festigkeit sowohl der Folie neben der Schweißung als auch der Schweißung selbst.

Die Erfindung sieht nun eine Verlängerungseinrichtung vor, welche eine Verlängerung der Folie beispielsweise außerhalb des Verbindungsbereichs bewirkt. Die Folie kann nun, wenn sie sich um die Abwicklung des Anschlussteils legt, die zusätzliche erforderliche Längenreserve aus demjenigen Bereich der Folie heranziehen, welcher von der Verlängerungseinrichtung verlängert worden ist.

Analog zu diesem Gedanken kann die erforderliche Längenreserve auch innerhalb des Verbindungsbereichs oder gemeinsam innerhalb und außerhalb des Verbindungsbereichs vorgehalten werden.

Im Ergebnis treten erheblich weniger Spannungen auf, und bei Prototypenversuchen des Erfinders wurden ganz hervorragende Schweißergebnisse erreicht.

Bevorzugt ist die Verlängerungseinrichtung so im Werkzeugdurchlauf angeordnet, dass sie das Verlängern der Folie zeitlich vor dem Verschweißen bewirken kann. Bei einer solchen Gestaltung nimmt zunächst die Verlängerungseinrichtung das Verlängern der Folie außerhalb des designierten Verlängerungsbereichs vor. Erst anschließend wird die Folie mit ihrem Verbindungsbereich um das Anschlussteil herum gelegt, also beispielsweise vom Schweißwerkzeug mit den Werkzeugflanken um das Anschlussteil herum gepresst. Die Folie zieht während des Vorgangs des Herumlegens um das Anschlussteil den im Vorfeld verlängerten Bereich von seitlich des Verbindungsbereichs nach.

Die Verlängerungseinrichtung weist bevorzugt ein Verformwerkzeug auf.

Prinzipiell kommen für die Verlängerungseinrichtung zahlreiche Möglichkeiten in Betracht. So wäre beispielsweise daran denkbar, dass die Folie lediglich erwärmt wird, bis sie sich unter ihrem Eigengewicht oder unter mechanischer Einwirkung eines Werkzeugs oder eines Lüfters verlängert. Dies sind jedoch sehr schwer präzise durchzuführende Prozesse.

Insbesondere sei daher an ein Werkzeug gedacht, welches aktiv eine vorgegebene Verformung in die Folie einbringt. Durch die Formgebung des Verformwerkzeugs kann auf diese Weise recht gut auf die endgültige Form und das Maß der Verlängerung der Folie Einfluss genommen werden.

Es wird als besonders vorteilhaft erachtet, das Verformwerkzeug dazu einzurichten, eine Wellenform in der Folie zu erzeugen. Eine Wellenform hat die Wirkung, dass die Folie mindestens zu einer Seite aus ihrer ursprünglichen Ebene heraus geformt wird, infolge weicherer Übergänge jedoch keinen Knick oder nur wenige Knicke erleidet. Außerdem können Wellenformen relativ einfach in ihrer Länge, in der Anzahl der Wellen oder der Amplitude definiert und das entsprechende Werkzeug hergestellt werden.

Alternativ sind viele andere Geometrien denkbar, beispielsweise ZickZack-Verläufe, trapezförmige Auslenkungen aus der Folienebene oder rechteckige Auslenkungen.

Auch ist denkbar, dass das Verformwerkzeug selbst eine Verformeinrichtung für seine formgebende Oberfläche hat. So ist beispielsweise denkbar, dass das Verformwerkzeug mit einem Blechstreifen verformend an die Folie angreift, während der Blechstreifen rückwärtig an mehreren diskreten Punkten an Verstellern gehalten ist. Über ein Verstellen der Versteller gegeneinander und/oder gegenüber der eigentlichen Ebene der Folie kann somit nicht nur die genaue Form eingestellt werden, sondern auch beispielsweise eine gewünschte Verlängerung dem Maß nach recht genau vorgegeben werden, ohne dass die Werkzeuge ausgetauscht werden müssen.

Besonders leicht fällt die Berechnung der durch die Wellenform gewonnenen zusätzlichen Länge, wenn das Verformwerkzeug dazu eingerichtet ist, die Wellenform in der Folie in einer Sinusform im Schnitt zu erzeugen.

Mit anderen Worten, und auch unabhängig von sämtlichen vorstehenden Erfindungsgedanken, wird die Aufgabe generell dadurch gelöst, dass außerhalb des Verbindungsbereichs der Folie eine Längenreserve in der Folie zu erzeugen, und zwar bevorzugt mittels eines Verformwerkzeugs.

Ein solches Verformwerkzeug erzeugt bei einer bevorzugten Ausführungsform der Erfindung eine Längenreserve in der Folie, welche zwischen zwei fixierten Punkten der Folie mindestens eine halbe Abwicklung des Verbindungsbereichs beträgt. Im Idealfall ist die Längenreserve mindestens so groß wie die vollständige Abwicklung des Verbindungsbereichs, wobei jeweils die Differenz zwischen der halben beziehungsweise vollständigen Abwicklung und der ursprünglichen, geraden Verbindung in Form einer Sehne bereits ausreichend sein kann.

Begrifflich sei zur "Abwicklung des Verbindungsbereichs" erläutert, dass hiermit die Länge der Strecke gemeint ist, welche im Schnitt die Folie bei ihrer Lage um das Anschlussteil herum einnehmen muss, und zwar mit ihrem Verbindungsbereich. Wenn also wie in der WO2007/140 760 A2 von oben eine Folie und von unten eine Folie gegen ein kreisförmiges Schlauchstück geschweißt werden, so ist die Abwicklung für die obere und die untere Folie gleich und entspricht jeweils dem halben Kreisumfang des einzuschweißenden Rohrstücks. Bei anderen Formen ist es ohne weiteres denkbar, dass die Abwicklung der Folien oberhalb und unterhalb des Anschlussteils unterschiedliche Längen haben. Auch ist denkbar, oben und/oder unten mit mehreren Folien die Verbindung herbei zu führen, beispielsweise wenn mehrlagige Beutel erzeugt werden sollen.

Je nach Wahl der Folien hinsichtlich Werkstoff und Folienstärke kann es opportun sein, die Abwicklungen der Folien als unterschiedlich anzunehmen, weil sich die äußere Folie nicht nur um das Anschlussteil herum legen muss, sondern außerdem um das dazwischenliegende innere Folienstück. Es ist daher denkbar, dass die mehreren Folien unterschiedlichen Verlängerungen unterworfen werden. In den meisten Fällen wird es jedoch wirtschaftlicher sein, die beiden Folien mit einer Verlängerungseinrichtung zu verlängern. Auch hierbei kann jedoch der späteren Lage bereits Rechnung getragen werden, beispielsweise dadurch, dass in der eingebrachten Wellenform bereits die spätere Krümmung der beiden Folien um das Anschlussteil herum berücksichtigt wird.

Um die Folie leichter verlängern zu können, wird vorgeschlagen, dass die Verlängerungseinrichtung eine Folienheizung aufweist. Bei den meisten Folienwerkstoffen ist es deutlich werkstoffschonender, wenn vor oder während des Verlängerungseingriffs eine Erwärmung der Folie stattfindet, zumindest im Bereich außerhalb des Verbindungsbereichs.

So ist beispielsweise denkbar, dass die Verlängerungseinrichtung eine Strahlungsheizung und ein ungeheiztes Verformwerkzeug aufweist.

Bei Versuchen des Erfinders hat es sich jedoch in den meisten Fällen als vorteilhaft herausgestellt, wenn die Verlängerungseinrichtung ein beheiztes Verformwerkzeug aufweist. Dieses kann in einem Arbeitsschritt die Folie greifen, erwärmen und verformen, während ansonsten entweder zwei zeitlich nacheinander gesetzte Arbeitsschritte notwendig sind oder aber eine räumlich im Zulauf zum Verformwerkzeug angeordnete Erwärmung der Folie.

Es wurde bereits darauf hingewiesen, dass die Vorrichtung eine Transporteinrichtung für ein Endlosfolienband aufweisen kann. Bei geeignetem Einsatz der Erfindung können nicht nur Einzelnutzen hergestellt werden, sondern ebenfalls ein Endlosfolienband verarbeitet werden.

Hinsichtlich der Anordnung der Verlängerungseinrichtung zu einer ohnehin vorhandenen Verschweißeinrichtung ist sowohl denkbar, dass diese an einer Station angeordnet sind, als auch das Anordnen an separaten Stationen. Die Anordnung an einer Station wird regelmäßig eine räumlich kompaktere Anlage ermöglichen, während das Anordnen an separaten Stationen regelmäßig die erforderliche Durchlaufzeit durch die Anlage herabsetzen wird.

Hinsichtlich der Anordnung der Verlängerungseinrichtung wurde außerdem bereits darauf hingewiesen, dass diese bevorzugt so positioniert ist, dass die Verlängerungseinrichtung eine Verlängerung der Folie zwischen zwei Verbindungsbereichen oder zwischen drei oder mehr Verbindungsbereichen bewirken kann, abhängig von der Anzahl der in einem Arbeitsgang und meist in einer geometrischen Linie vorgesehenen Anschlussteile. So ist im Falle der WO2007/140 760 A2 beispielsweise vorgeschlagen, zwei Schlauchstücke an einem Beutel anzuordnen. Dies erfordert nach Möglichkeit das gleichzeitige Einschweißen der beiden Röhrchen an einem Werkzeug mittels zweier Mandrenen. In diesem Fall sollte also zumindest seitlich außerhalb der beiden designierten Verbindungsbereiche die Verlängerungseinrichtung angreifen, oder zwischen den beiden designierten Verbindungsbereichen. Besonders bevorzugt ist es, wenn eine Verlängerungseinrichtung sowohl zwischen den beiden designierten Verbindungsbereichen als auch seitlich außerhalb dieser beiden angreift.

Nach einem zweiten Aspekt der Erfindung löst die Aufgabe die Verwendung einer Folie mit einer Wellenform außerhalb eines Verbindungsbereichs zum Verschweißen des Verbindungsbereichs mit einem Anschlussteil.

Dieser Erfindungsgedanke basiert auf der Erkenntnis, dass eine solche Folie von einem Zulieferer in die Anlage zugeliefert werden könnte, welche letztendlich die Einschweißung vornimmt.

Technisch einfacher ist es jedoch sicherlich, ein ebenes Endlosfolienband zu verwenden und dies in derjenigen Anlage der gezielten Verlängerung zu unterwerfen, welche letztendlich auch das Verschweißen vornimmt.

Am Beispiel der Beutel lässt sich gut erkennen, dass die eingebrachten Verlängerungen, beispielsweise die Wellen, in der Folie oft nicht über die gesamte Länge des Endlosfolienbandes vorliegen sollten, sondern nur an einigen diskreten Stellen, beispielsweise nur an einem senkrecht oder parallel zur Maschinenrichtung angeordneten streifenförmigen Bereich pro Einzelnutzen .

Nach einem dritten Aspekt der Erfindung löst die gestellte Aufgabe ein Verfahren nach Anspruch 1.

Dieses Verfahren wurde vorstehend bereits erläutert. Der wesentliche Verfahrensgedanke ist, dass zunächst die Längenreserve geschaffen wird.

Das Verfahren ermöglicht eine besonders hohe Produktqualität hinsichtlich der angeschweißten Anschlussteile, wenn in einem vorgeschalteten Schritt ein Verformwerkzeug hinsichtlich seiner formgebenden Kontur anhand eines Rechenverfahrens ausgewählt, hergestellt oder eingestellt wird.

Der grundlegende Gedanke hierbei ist, dass für verschiedene Werkstoffe der Folien, insbesondere aber für unterschiedlich große oder unterschiedlich viele Anschlussteile, unterschiedliche Verlängerungen in der Folie zur Verfügung stehen sollten. Die Verlängerungen können einerseits hinsichtlich des Maßes der Verlängerung unterschiedlich sein, andererseits hinsichtlich der Form oder des Ortes der Verlängerungen.

Um unterschiedliche Verlängerungen in die zulaufende Folie oder einen Folien-Einzelnutzen einzubringen, kann ein möglichst passendes Werkzeug aus einer Batterie ausgesucht werden, oder ein Werkzeug wird anhand eines Rechenverfahrens zunächst gezielt hergestellt. So ist insbesondere denkbar, dass das Maß der erforderlichen Folienverlängerung errechnet wird, welches benötigt wird, um die Folie um die Abwicklung des Anschlussteils herum zu pressen. Sodann kann ein Werkzeug ausgewählt werden, welches dieser Verlängerung möglichst genau entspricht, oder es wird ein Werkzeug hergestellt, welches diese Verlängerung möglichst genau bietet. Alternativ ist denkbar, dass hinsichtlich der errechneten oder iterativ herausgefundenen notwendigen Verlängerung eine Einstellung des Verformwerkzeugs vorgenommen wird, so dass mit ein- und demselben Verformwerkzeug unterschiedlichste Verlängerungen hinsichtlich Amplitude, Form von Wellen oder Ort von Wellen ermöglicht werden.

Es versteht sich, dass die Vorteile einer vorstehend beschriebenen Verschweißvorrichtung auch für die gesamte Anlage zum Produzieren von Beuteln aus zwei Folien oder aus mehr Folien mit einem oder mehreren zwischen den Folien eingeschweißten schlauchförmigen Anschlussteilen einen Vorteil hervorruft.

Gleichfalls wirkt der Vorteil unmittelbar auf einen Beutel fort, welcher aus mindestens zwei Folien und mindestens einem Anschlussteil mittels einer vorstehend beschriebenen Vorrichtung, mittels einer vorstehend beschriebenen Verwendung, mittels eines vorstehend beschriebenen Verfahrens und/oder mittels einer vorstehend beschriebenen Anlage hergestellt ist.

Die Erfindung wird nachstehend anhand eines Ausführungsbeispiels unter Bezugnahme auf die Zeichnung näher erläutert. In der Zeichnung zeigen:
- Figur 1: jeweils in perspektivischer Ansicht einen Einzelnutzen einer Folie im Ausgangszustand,
- Figur 2: den Einzelnutzen aus Figur 1 in einem Verformwerkzeug,
- Figur 3: den Einzelnutzen aus den Figuren 1 und 2 in verformtem Zustand,
- Figur 4: zwei solcher Einzelnutzen mit zwei schlauchförmigen Anschlussteilen,
- Figur 5: jeweils schematisch in einem Schnitt zwei ebene Folien und zwei schlauchförmige Anschlussteile gemäß dem Stand der Technik,
- Figur 6: die Anordnung aus Figur 5 im Betriebszustand und
- Figur 7: zwei vorgeformte Folien und zwei schlauchförmige Anschlussteile.

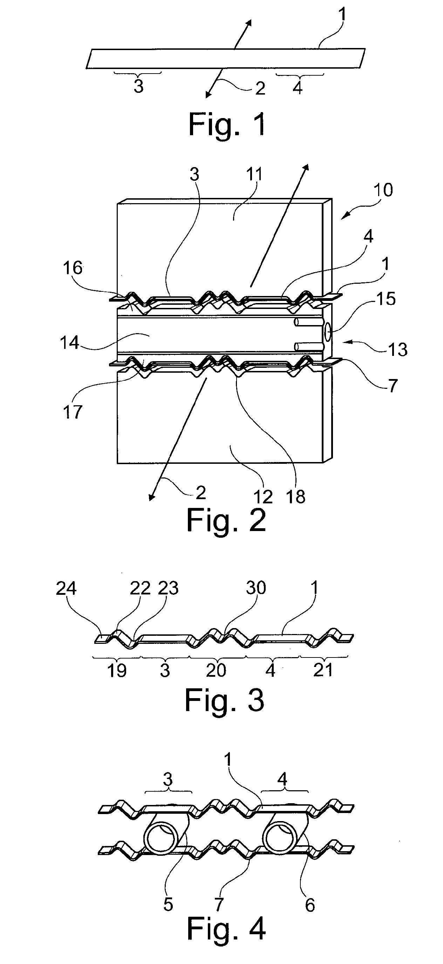

Der Einzelnutzen 1 in den Figuren 1, 2, 3, 4 und 7 ist ein Folienstreifen. Ebenso könnte ein Endlosfolienband in einer Maschinenrichtung 2 vorliegen. Der Einzelnutzen 1 hat eine Länge von beispielsweise 65 mm. Dies entspricht somit der theoretischen Breite des Endlosbandes senkrecht zur Maschinenrichtung 2.

Es sei ausdrücklich darauf hingewiesen, dass es sich bei der Anordnung aus Maschinenrichtung 2 und der Ausrichtung des verlängerten Streifens nur um ein leicht zu zeigendes Beispiel handelt.

In der Praxis sind zwei andere Varianten meist eher anzutreffen. Dies ist einerseits eine Schlauchfolie, die in Maschinenrichtung transportiert wird, während die Verlängerungsstreifen senkrecht zur Maschinenrichtung liegen. Andererseits sind dies Folienlagen für die Beutelherstellung, bei welchen der Verlängerungsstreifen parallel zur Maschinenrichtung angeordnet ist, praktischerweise oft am Rand der Folienlagen entlang.

Der Einzelnutzen 1 ist dazu vorgesehen in zwei Verbindungsbereichen 3, 4 mit den schlauchförmigen Anschlussteilen 5, 6 verschweißt zu werden.

Eine Anlage zum Verschweißen des Einzelnutzens 1 mit den beiden schlauchförmigen Anschlussteilen 5, 6 und einer weiteren Folie in Form eines weiteren Einzelnutzens 7 hat hierzu an einer Verschweißstation zwei Mandrenen, also stabförmige Elektroden, und Linienelektroden.

Im Falle eines thermischen Schweißverfahrens können anderweitige Schweißwerkzeuge zum Einsatz kommen. Insbesondere ist es denkbar, dass das Anschlussteil ohne einen Innendorn auskommen kann und stattdessen von außen gehalten wird, beispielsweise geklemmt wird.

Es soll eine Verschweißung der Verbindungsbereiche 3, 4 jeweils mit den Abwicklungen der schlauchförmigen Anschlussteile 5, 6 erfolgen. Konkret soll der Einzelnutzen 1 mit seinen Verbindungsbereichen 3, 4 so um die Anschlussteile 5, 6 herum gelegt werden, dass der Einzelnutzen 1 exakt die obere Hälfte des Umfangs der Anschlussteile 5, 6 umläuft, die Verbindungsbereiche des weiteren Einzelnutzens 7 hingegen die unteren Hälften der beiden Anschlussteile 5, 6.

Zwischen den Verbindungsbereichen, also im Endzustand zwischen denjenigen Bereichen, welche um die Anschlussteile 5, 6 herum verlaufen, soll der Einzelnutzen 1 mit dem weiteren Einzelnutzen 7 verschweißt werden.

Im Ergebnis ergibt sich eine dichtende Verbindung zwischen dem Einzelnutzen 1 und dem weiteren Einzelnutzen 7 mit Ausnahme der beiden Durchlässe in Form der schlauchförmigen Anschlussteile 5, 6.

Im Zulauf der Produktionsanlage ist das Verformwerkzeug 10 mit einem Oberwerkzeug 11, einem Unterwerkzeug 12 und einem Mittelwerkzeug 13 angeordnet, wobei das Zentralwerkzeug 13 an einem zentralen Träger 14 mit einer Bohrung 15 einen unteren Gegenpart 16 für das Oberwerkzeug 11 sowie einen oberen Gegenpart 17 für das Unterwerkzeug 12 trägt. Die Bohrung 15 dient beispielsweise zum Durchführen von Kühlmittel oder heißen Medien oder zur Aufnahme eines stationär angeordneten Heizmittels.

Das Oberwerkzeug 11, das Zentralwerkzeug 13 und das Unterwerkzeug 12 bilden eine Linie. Sie sind senkrecht zu der Maschinenrichtung 2 (bei Bearbeitung eines Endlosfolienbands) beziehungsweise zum Einzelnutzen 1 und dem weiteren Einzelnutzen 7 angeordnet.

Das Verformwerkzeug 10 ist zumindest im Zentralwerkzeug 13, bevorzugt auch im Ober- und Unterwerkzeug 11, 12, beheizbar. Das Zentralwerkzeug ist zwischen dem Einzelnutzen 1 und dem weiteren Einzelnutzen 7 beziehungsweise dem entsprechenden Endlosfolienband angeordnet, das Oberwerkzeug 11 oberhalb und das Unterwerkzeug 12 unterhalb. Das Oberwerkzeug 11 und das Unterwerkzeug 12 können zum Zentralwerkzeug 13 kraft-oder weggesteuert verfahren werden.

Im Betrieb der Produktionsanlage, also entweder bei einem kontinuierlichen Betrieb mit einem Endlosfolienband oder im diskreten Betrieb mit Einzelnutzen 1, 7, ist das Verformwerkzeug 10 räumlich getrennt von einer Verschweißeinrichtung und im Durchlauf durch die Anlage zeitlich vorher angeordnet.

Die beiden Einzelnutzen 1, 7 werden in das Verformwerkzeug 10 eingesetzt. Das Zentralwerkzeug 13 und bevorzugt ebenfalls das Ober- und Unterwerkzeug 11, 12 werden erwärmt und anschließend hin zum Zentralwerkzeug gefahren. Beim Kontakt mit dem Einzelnutzen 1, 7 werden diese ebenfalls erwärmt und sind infolgedessen leichter verformbar. Zwischen den designierten Verbindungsbereichen 3, 4 weisen die formgebenden Oberflächen sowohl des Oberwerkzeugs 11 als auch des Unterwerkzeugs 12 und der Gegenparte 16, 17 am Zentralwerkzeug 13 mehrere Wellenformen 18 (exemplarisch gekennzeichnet) auf.

Durch die wellenförmigen formgebenden Oberflächen erhalten die beiden Einzelnutzen 1, 7 eine Form, welche auch nach dem Auseinanderfahren des Verformwerkzeugs 10 in die Folie eingeprägt ist. Da die Einzelnutzen 1, 7 am Rand fixiert sind, und da sie ebenfalls im Bereich der Verbindungsbereiche 3, 4 weitgehend fixiert sind, werden die Einzelnutzen 1, 7 ganz überwiegend, wenn nicht ausschließlich, in drei Verlängerbereichen 19, 20, 21 durch mechanischen Angriff verlängert.

Bei einem konkreten Beispiel an einem Prototypen des Erfinders hat das Einprägen einer Ziehharmonika in die Folie eine Verlängerung jedes Einzelnutzens 1, 7 von 65 mm (Ausgangszustand) auf 74,63 mm (verformter Zustand) ergeben.

Es wurde also eine Verlängerung der Folie um 9,63 mm erreicht, und zwar in Form einer Welle mit Wellenbergen 22 (exemplarisch gekennzeichnet) und Wellentälern 23 (exemplarisch gekennzeichnet).

Das Verformwerkzeug 10 dient somit im Sinne der Erfindung als Verlängerungseinrichtung, und es erzeugt eine Verlängerung der Einzelnutzen 1, 7 der Folie in den Verlängerungsbereichen 19, 20, 21, und somit außerhalb der Verbindungsbereiche 3, 4.

Im dargestellten Beispiel trägt die formgebende Oberfläche am Verformwerkzeug 10 sinusförmige Berge und Täler, so dass an dieser Übergangsstelle 24 zwischen ebenen Bereichen und wellenförmigen Bereichen am Einzelnutzen 1, 7 ein Knick der Folie auftritt. Dies kann ohne weiteres jedoch dadurch vermieden werden, dass ausgehend von den ebenen Bereichen sich sinusförmige Bereiche anschließen, welche am Maximalwert einer Sinuskurve liegen. So wäre es beispielsweise denkbar, statt Bergen 22 und Tälern 23 ausschließlich Berge vorzusehen.

Auch ist selbstverständlich denkbar, beliebige andere Winkelfunktionen oder beliebige andere Formen in die Folie einzuprägen. Es ist jedoch von Vorteil, wenn sich die formgebende Oberfläche am Verformwerkzeug 10 in ihrem Verlauf analytisch beschreiben lässt, weil dann die Verlängerung der Folie und somit die gewonnene Längenreserve mit einfachen Mitteln analytisch berechnet werden kann.

Es sei erwähnt, dass die verformten Bereiche, also die Wellenberge und die Wellentäler, nicht unmittelbar bis an die Verbindungsbereiche 3, 4 heran reichen müssen. Mit anderen Worten heißt dies, dass die Verformbereiche 19, 20, 21 nicht identisch mit den ebenen Bereichen an der Folie sein müssen. Vielmehr ist es auch denkbar, zwischen der Begrenzung eines Verbindungsbereichs 3, 4 und dem Beginn eines Verformbereichs 19, 20, 21 einen ebenen Streifen zu belassen.

Im vorliegenden Beispiel wurde die Verformung auf die Einzelnutzen 1, 7 symmetrisch zu jedem Verbindungsbereich 3, 4 aufgebaut:

So befindet sich auf jeder Seite jedes Verbindungsbereichs 3, 4 jeweils eine Welle mit einem Wellenberg 22 und einem Wellental 23. An einer spiegelsymmetrischen Mitte 30 schließt sich unmittelbar die Welle derjenigen Hälfte des Einzelnutzens 1, 7 an, welche zum benachbarten Verbindungsbereich symmetrisch aufgebaut ist. Für zwei Verbindungsbereiche 3, 4 gibt es daher insgesamt vier Wellen mit jeweils einem Wellenberg 22 und einem Wellental 23.

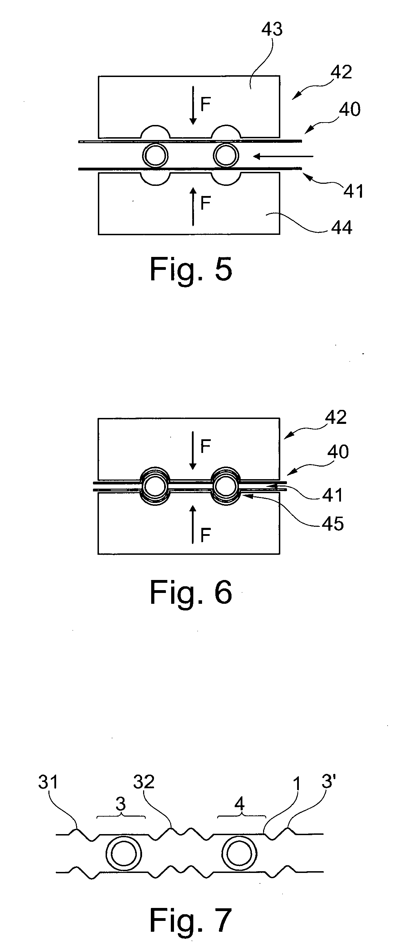

Sichergestellt ist auf diese Weise insbesondere, dass jeder Verbindungsbereich 3, 4 auf zwei Bereiche mit Längenreserven 31, 32, 33 zurückgreifen kann, und dass es weder zwischen zwei Röhrchen noch zwischen den Röhrchen und dem Rand einen Bereich gibt, in welchem die Folie keinen Längenspielraum mehr hat, wenn die Verbindungsbereiche 3, 4 um die Abwicklung der Verbindungsteile herum gepresst werden (vgl. zu alledem insbesondere Figur 7).

Im Stand der Technik hingegen werden eine obere Folie 40 und eine untere Folie 41 (vgl. Figuren 5, 6) in ebener Form in ein Schweißwerkzeug 42 eingebracht. Ein Oberwerkzeug 43 und ein Unterwerkzeug 44 fahren sodann mit einer Anpresskraft F gegeneinander. An Werkzeugflanken 45 (exemplarisch gekennzeichnet) kommt es zu einem starken Folienauszug. Die Folie kann nicht gleichmäßig nachgleiten. Es besteht daher immer die Gefahr, dass sich kritische Bereiche hinsichtlich der Festigkeit oder der Dichtigkeit ausbilden.

Die Erfindung hingegen erreicht eine überraschend gute Verbesserung der Verschweißung im Bereich Folie, Rohr, Folie, durch die gleichmäßige und kontrollierte Verlängerung.

## Patentansprüche

1. Verfahren zum Verschweißen eines Verbindungsbereichs (3, 4) einer Folie mit einem dreidimensionalen Anschlussteil (5,6),
***dadurch gekennzeichnet, dass***
a. zunächst durch Verlängern der Folie mittels eines mechanischen Verlängerungseingriffs in den Werkstoff der Folie eine Längenreserve (31, 32, 33) der Folie innerhalb und/oder außerhalb des Verbindungsbereichs (3,4) geschaffen und
b. erst danach der Verbindungsbereich (3, 4) mit dem Anschlussteil (5, 6) verschweißt wird.

2. Verfahren nach Anspruch 1, ***dadurch gekennzeichnet, dass*** in einem vorgeschalteten Schritt ein Verformwerkzeug hinsichtlich seiner Formgebungskontur anhand eines Rechenverfahrens ausgewählt, hergestellt oder eingestellt wird.

3. Vorrichtung zum Verschweißen eines Verbindungsbereichs (3, 4) einer Folie mit einem dreidimensionalen Anschlussteil (5, 6) in gewerblicher Herstellung unter Einsatz einer Endlosfolienbahn,
mit einer Station mit einer Verschweißeinrichtung, welche das Verschweißen durchführt,
***gekennzeichnet durch***
eine Verlängerungseinrichtung zum Verlängern der Folie innerhalb und/oder außerhalb des Verbindungsbereichs (3, 4) mittels eines mechanischen Verlängerungseingriffs in den Werkstoff der Folie,
wobei im Betrieb der Vorrichtung mit einer Folie der Verlängerungseingriff der Folie eine Längenreserve (31, 32, 33) zur Verfügung stellt,
sodass im Betrieb mit einer Folie beim Herumziehen der Folie um eine Abwicklung des Anschlussteils (5, 6) die Längenreserve (31, 32, 33) aus demjenigen Bereich der Folie herangezogen wird, welcher von der Verlängerungseinrichtung verlängert worden ist,
wobei die Verlängerungseinrichtung und die Verschweißeinrichtung an einer Station oder an separaten Stationen angeordnet sein können.

4. Vorrichtung nach Anspruch 3, ***dadurch gekennzeichnet, dass*** die Verlängerungseinrichtung so in einem Werkzeugdurchlauf angeordnet ist, dass sie das Verlängern der Folie zeitlich vor dem Verschweißen bewirkt.

5. Vorrichtung nach Anspruch 3 oder 4, ***dadurch gekennzeichnet, dass*** die Verlängerungseinrichtung ein Verformwerkzeug aufweist.

6. Vorrichtung nach Anspruch 5, ***dadurch gekennzeichnet, dass*** das Verformwerkzeug mit einem Wellenformerzeuger eingerichtet ist, um eine Wellenform in der Folie zu erzeugen.

7. Vorrichtung nach Anspruch 6, ***dadurch gekennzeichnet, dass*** das Verformwerkzeug dazu eingerichtet ist, die Wellenform in einer Sinusform zu erzeugen.

8. Vorrichtung nach einem Ansprüche 5 bis 7, ***dadurch gekennzeichnet, dass*** das Verformwerkzeug dazu eingerichtet ist, eine Längenreserve (31, 32, 33) in der Folie zu erzeugen, welche zwischen zwei fixierten Punkten der Folie mindestens eine halbe Abwicklung des Verbindungsbereichs (3, 4) beträgt, insbesondere die vollständige Abwicklung des Verbindungsbereichs (3, 4).

9. Vorrichtung nach einem der Ansprüche 3 bis 8, ***dadurch gekennzeichnet, dass*** die Verlängerungseinrichtung eine Folienheizung aufweist.

10. Vorrichtung nach einem der Ansprüche 3 bis 9, ***dadurch gekennzeichnet, dass*** die Verlängerungseinrichtung ein ungeheiztes Verformwerkzeug und bevorzugt eine Strahlungsheizung aufweist.

11. Vorrichtung nach einem der Ansprüche 3 bis 10, ***dadurch gekennzeichnet, dass*** die Verlängerungseinrichtung ein beheiztes Verformwerkzeug aufweist.

12. Vorrichtung nach einem der Ansprüche 3 bis 11, ***dadurch gekennzeichnet, dass*** die Vorrichtung eine Transporteinrichtung für ein Endlosfolienband oder einen Drehtisch aufweist.

13. Vorrichtung nach einem der Ansprüche 3 bis 12, ***dadurch gekennzeichnet, dass*** die Verlängerungseinrichtung und eine Verschweißeinrichtung an einer Station angeordnet sind.

14. Vorrichtung nach Anspruch 13, ***dadurch gekennzeichnet, dass*** die Verlängerungseinrichtung und die Verschweißeinrichtung an einem kombinierten Werkzeug angeordnet sind.

15. Vorrichtung nach einem der Ansprüche 3 bis 12, ***dadurch gekennzeichnet, dass*** die Verlängerungseinrichtung und eine Verschweißeinrichtung an separaten Stationen angeordnet sind.

16. Vorrichtung nach einem der Ansprüche 3 bis 15, ***dadurch gekennzeichnet, dass*** die Verlängerungseinrichtung so angeordnet ist, dass sie eine Verlängerung der Folie zwischen zwei Verbindungsbereichen bewirken kann.

17. Verwendung einer Folie mit einer Wellenform, geformt mittels eines mechanischen Verlängerungseingriffs in den Werkstoff der Folie, mit einer Vorrichtung nach einem der Ansprüche 3 bis 16, außerhalb eines Verbindungsbereichs zum Verschweißen des Verbindungsbereichs (3, 4) mit einem Anschlussteil (5, 6).

18. Anlage zum Produzieren von Beuteln aus zwei Folien mit einem zwischen den Folien eingeschweißten schlauchförmigen Anschlussteil (5, 6), ***dadurch gekennzeichnet, dass*** die Anlage eine Vorrichtung zum Verschweißen nach einem der Ansprüche 3 bis 16 aufweist und/oder dass die Anlage zum Durchführen des Verfahrens nach Anspruch 1 eingerichtet ist.

19. Beutel, hergestellt aus zwei Folien und einem Anschlussteil (5, 6) mittels einer Vorrichtung nach einem der Ansprüche 3 bis 16, einer Verwendung nach Anspruch 17, eines Verfahrens nach einem der Ansprüche 1 oder 2 und/oder mit einer Anlage nach Anspruch 18.

## Claims

1. Method for welding a joining region (3, 4) of a foil to a three- dimensional connecting part (5, 6),
**characterized in that**
a.) first, by extending the foil by means of a mechanical extension intervention in the foil material, a length reserve (31, 32, 33) of the foil is created within and/or outside the joining region (3, 4), and
b.) only after this, the joining region (3, 4) is welded to the connecting part (5, 6).

2. Method according to Claim 1, **characterized in that** in an upstream step, a forming tool is selected, produced or inserted by means of a calculation method in view to its shaping contour.

3. Apparatus for welding a joining region (3, 4) of a foil to a three- dimensional connecting part (5, 6) in commercial production with use of a continuous foil sheet,
having a station with a welding unit which performs welding, **characterized by**
an extension unit for extending the foil within and/or outside the joining region (3, 4) by means of a mechanical extension intervention in the material of the foil,
wherein during operation of the apparatus with a foil, the extension intervention provides the foil with a length reserve (31, 32, 33)
so that during operation with a foil, during drawing of the foil around an unwinding portion of the connecting part (5, 6), the length reserve (31, 32, 33) from that part of the foil is used which has been extended by the extension unit,
wherein the extension unit and the welding unit can be arranged at one station or at separate stations.

4. Apparatus according to Claim 3, **characterized in that** the extension unit is arranged in a tool passage such that it causes the extension of the foil before welding.

5. Apparatus according to Claim 3 or 4, **characterized in that** the extension unit has a forming tool.

6. Apparatus according to Claim 5, **characterized in that** the forming tool is provided with a wave- form generator for creating a wave form in the foil.

7. Apparatus according to Claim 6, **characterized in that** the forming tool is adapted to generate the wave form in a sinusoidal shape.

8. Apparatus according to one of Claims 5 through 7, **characterized in that** the forming tool is adapted to generate a length reserve (31, 32, 33) in the foil which amounts to at least half an unwinding of the joining region (3, 4), in particular the total unwinding of the joining region (3, 4), between two fixed points on the foil.

9. Apparatus according to one of Claims 3 through 8, **characterized in that** the extension unit has a foil heater.

10. Apparatus according to one of Claims 3 through 9, **characterized in that** the extension unit has an unheated forming tool and preferably a radiant heating system.

11. Apparatus according to one of Claims 3 through 10, **characterized in that** the extension unit has a heated forming tool.

12. Apparatus according to one of Claims 3 through 11, **characterized in that** the apparatus has a transport unit for a continuous foil sheet or a turntable.

13. Apparatus according to one of Claims 3 through 12, **characterized in that** the extension unit and a welding unit are arranged at one station.

14. Apparatus according to Claim 13, **characterized in that** the extension unit and the welding unit are arranged at a combined tool.

15. Apparatus according to one of Claims 3 through 12, **characterized in that** the extension unit and a welding unit are arranged at separate stations.

16. Apparatus according to one of Claims 3 through 15, **characterized in that** the extension unit is arranged such that it can cause an extension of the foil between two joining regions.

17. Use of a foil having a wave form, formed by means of a mechanical extension intervention in the foil material, with an apparatus according to one of Claims 3 through 16, outside a joining region for welding the joining region (3, 4) to a connecting part (5, 6).

18. Plant for the production of bags from two foils with a tubular connecting part (5, 6) welded between the foils, **characterized in that** the plant has an apparatus for welding according to one of Claims 3 through 16, and/or **in that** the plant is adapted for performing the method according to Claim 1.

19. Bag, manufactured from two foils and a connecting part (5, 6) by means of an apparatus according to one of Claims 3 through 16, a use according to Claim 17, a method according to one of Claims 1 or 2 and/or with a plant according to Claim 18.

## Revendications

1. Procédé de soudage d'une zone de connexion (3, 4) d'un film à une pièce de raccordement tridimensionnelle (5, 6),
**caractérisé en ce que**,
a. tout d'abord, en rallongeant le film au moyen d'une intervention mécanique de rallongement, une réserve de longueur (31, 32, 33) du film est créée dans le matériau du film à l'intérieur et/ou à l'extérieur de la zone de connexion (3, 4) et,
b. à ce moment- là seulement, la zone de connexion (3, 4) est soudée à la pièce de raccordement (5, 6).

2. Procédé selon la revendication 1, **caractérisé en ce que**, dans une étape précédente, un outil de déformation est sélectionné, fabriqué ou réglé au niveau du contour de sa forme à partir d'un procédé de calcul.

3. Dispositif de soudage d'une zone de connexion (3, 4) d'un film à une pièce de raccordement tridimensionnelle (5, 6) en fabrication industrielle en utilisant une bande de film continue,
comportant une station équipée d'un dispositif de soudage qui réalise le soudage,
**caractérisé par**
un dispositif de rallongement pour rallonger le film à l'intérieur et/ou à l'extérieur de la zone de connexion (3, 4) au moyen d'une intervention mécanique de rallongement dans le matériau du film,
dans lequel, en cours de fonctionnement du dispositif avec un film, l'intervention de rallongement du film crée une réserve de longueur (31, 32, 33),
de sorte que, en cours de fonctionnement avec un film, en tirant le film autour d'un déroulement de la pièce de raccordement (5, 6), on utilise la réserve de longueur (31, 32, 33) de la zone du film qui a été rallongée par le dispositif de rallongement,
le dispositif de rallongement et le dispositif de soudage pouvant être disposés à une station ou à des stations séparées.

4. Dispositif selon la revendication 3, **caractérisé en ce que** le dispositif de rallongement est disposé dans un passage d'outil de manière à déclencher le rallongement du film chronologiquement avant le soudage.

5. Dispositif selon la revendication 3 ou 4, **caractérisé en ce que** le dispositif de rallongement présente un outil de déformation.

6. Dispositif selon la revendication 5, **caractérisé en ce que** l'outil de déformation est conçu avec un générateur de forme ondulée afin de de créer une forme ondulée dans le film.

7. Dispositif selon la revendication 6, **caractérisé en ce que** l'outil de déformation est conçu pour générer la forme ondulée dans une forme sinusoïdale.

8. Dispositif selon une des revendications 5 à 7, **caractérisé en ce que** l'outil de déformation est conçu pour créer dans le film une réserve de longueur (31, 32, 33) qui, entre deux points fixés du film, représente au moins un demi- déroulement de la zone de connexion (3, 4), en particulier la totalité du déroulement de la zone de connexion (3, 4).

9. Dispositif selon une des revendications 3 à 8, **caractérisé en ce que** le dispositif de rallongement présente un chauffage de film.

10. Dispositif selon une des revendications 3 à 9, **caractérisé en ce que** le dispositif de rallongement présente un outil de déformation non chauffé et de préférence un chauffage rayonnant.

11. Dispositif selon une des revendications 3 à 10, **caractérisé en ce que** le dispositif de rallongement présente un outil de déformation chauffé.

12. Dispositif selon une des revendications 3 à 11, **caractérisé en ce que** le dispositif présente un dispositif de transport pour une bande de film continue ou un plateau tournant.

13. Dispositif selon une des revendications 3 à 12, **caractérisé en ce que** le dispositif de rallongement et un dispositif de soudage sont disposés à une station.

14. Dispositif selon la revendication 13, **caractérisé en ce que** le dispositif de rallongement et le dispositif de soudage sont disposés au niveau d'un outil combiné.

15. Dispositif selon une des revendications 3 à 12, **caractérisé en ce que** le dispositif de rallongement et un dispositif de soudage sont disposés à des stations séparées.

16. Dispositif selon une des revendications 3 à 15, **caractérisé en ce que** le dispositif de rallongement est disposé de manière à pouvoir déclencher un rallongement du film entre deux zones de connexion.

17. Utilisation d'un film ayant une forme ondulée, conformé au moyen d'une intervention mécanique de rallongement dans le matériau du film à l'aide d'un dispositif selon une des revendications 3 à 16, à l'extérieur d'une zone de connexion pour souder la zone de connexion (3, 4) à une pièce de raccordement (5, 6).

18. Installation de production de sacs à partir de deux films avec une pièce de raccordement de forme tubulaire soudée entre les films (5, 6), **caractérisée en ce que** l'installation présente un dispositif de soudage selon une des revendications 3 à 16 et/ou que l'installation est conçue pour réaliser le procédé selon la revendication 1.

19. Sac, fabriqué à partir de deux films et d'une pièce de raccordement (5, 6) au moyen d'un dispositif selon une des revendications 3 à 16, d'une utilisation selon la revendication 17, d'un procédé selon une des revendications 1 ou 2 et/ou d'une installation selon la revendication 18.
